# FASCICULE DE BREVET EUROPEEN

(11) **EP 0 578 734 B1**
(45) Date de publication et mention de la délivrance du brevet: **29.01.1997**
(21) Numéro de dépôt: 92909428.2
(22) Date de dépôt: 03.04.1992
(51) Int. Cl.: C08G 73/14, C08G 73/12, C08L 79/08

(54) **SOLUTION D'IMPREGNATION A BASE D'AU MOINS OLIGOMERE POLY(IMIDE-AMIDE) THERMOPLASTIQUE REACTIF ET D'UN CO-REACTIF**
Imprägnierungslösung auf Basis mindestens eines reaktiven thermoplastischen oligomeren Polyamidimids und einer co-reaktiven Verbindung.
IMPREGNATION SOLUTION BASED ON AT LEAST ONE THERMOPLASTIC POLY(IMIDE-AMIDE) OLIGOMER REAGENT AND ONE CO-REAGENT

(30) Priorité: 04.04.1991 FR 9104382
(43) Date de publication de la demande: 19.01.1994
(73) Titulaire: Ciba SC Holding AG, 4057 Basel (CH)
(72) Inventeur: CAMBERLIN, Yves, F-69300 Caluire (FR); DIEN, René, F-69390 Millery (FR); MICHAUD, Philippe, F-69006 Lyon (FR)
(86) Numéro de dépôt international: FR9200298
(87) Numéro de publication internationale: WO9217526

(56) Documents cités:
- EP-A- 376 892
- EP-A- 0 182 589
- Patent Abstracts of Japan, vol. 7, no. 289 (C-202), 23 décembre 1983, & JP,A, 58168657
- Patent Abstracts of Japan, vol. 13, no. 151 (C-584), 12 avril 1989, & JP,A, 63308037

## Description

La présente invention concerne des solutions constituées d'au moins un oligomère poly(imide-amide) thermoplastique réactif, d'un co-réactif approprié et d'au moins un solvant organique, utilisables notamment pour la réalisation d'articles intermédiaires pré-imprégnés en utilisant la technique de l'enroulement filamentaire ou celle de l'imprégnation de matériaux fibreux divers. Elle concerne également le principe actif de ces solutions constitué par le mélange d'au moins un oligomère poly(imide-amide) thermoplastique réactif avec un co-réactif, qui peut servir à la préparation des solutions précitées. Elle concerne encore les articles intermédiaires pré-imprégnés obtenus à partir de ces solutions.

Les articles intermédiaires pré-imprégnés (ou composites) servent de manière connue pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de pré-imprégnés sur une forme ou un support. On effectue ensuite le durcissement de la résine d'imprégnation dans les conditions technologiques habituelles relatives aux matériaux composites et en particulier à des températures comprises entre 100° et 300°C.

On a fait appel essentiellement jusqu'ici, lors de l'imprégnation en voie solvant, à des solutions comprenant (comme principe actif jouant le rôle de résine d'imprégnation) un oligomère polyimide thermodurcissable obtenu par réaction d'un N,N'-bis-imide d'acide dicarboxylique insaturé avec un co-réactif approprié (cf. notamment FR-A-2 638 163). Avec de pareilles résines d'imprégnation on obtient, après élimination du solvant, des composites qui présentent une haute tenue thermique (ils résistent sans se dégrader à des températures de 200° à 300°C durant un temps relativement long, de l'ordre de 10 000 à 100 heures), mais cette bonne thermostabilité est contrebalancée par un caractère relativement fragile du matériau ; pour fixer les idées, on fera noter que la valeur de l'énergie de propagation de fissure GlC (mesurée sur un composite unidirectionnel à base de fibres de carbone contenant 40 g de résine pour 60 g de fibres) est alors de l'ordre de 100 à 200 J/m², ce qui est une valeur insuffisante.

Dans la demande de brevet EP-A-182589, il est décrit des compositions pour imprégnation comprenant une resine polymère polyamide-imide contenant une fonctionalité acide amide en quantité suffisante pour la rendre soluble dans un solvant organique puis pour être ensuite hydrolysée en présence d'eau.

Finalement, la demande de brevet EP-A-376892 décrit des compositions comprenant de résine polymères polyamide-imides pouvant être combinées, entre-autres à certaines résines, telles qu'une résine epoxide ou un bismaleimide.

Poursuivant des travaux dans ce domaine de la technique, la Demanderesse a cherché à mettre au point une solution d'imprégnation améliorée, c'est-à-dire une solution d'imprégnation qui non seulement conduit à une bonne thermostabilité, mais de plus permet d'accéder à un composite ayant une meilleure tenue au choc ; dans ce contexte, il est souhaitable que la valeur de la résilience GlC dont on a parlé ci-avant soit supérieure à 400 J/m². Par ailleurs, la Demanderesse a cherché à mettre au point une solution d'imprégnation dont le principe actif constituant la résine d'imprégnation qui reste sur le substrat après l'élimination du solvant, possède une rhéologie qui soit parfaitement adaptée aux exigences de la mise en oeuvre : en particulier, il est souhaitable que la résine d'imprégnation d'une part possède un caractère collant marqué à température ambiante (par résine collante, on entend définir une résine qui, déposée sur le substrat et se trouvant à température ambiante, permet à ce substrat d'être positionné par simple pression et de tenir en contact dans n'importe quelle position) et d'autre part présente à des températures comprises entre 100° et 300°C un taux de fluage compris entre 1 et 20 % en poids (poids de résine ayant flué par rapport au poids de l'ensemble résine + substrat).

Il a maintenant été trouvé, et c'est ce qui constitue le premier objet de la présente invention, de nouvelles solutions d'imprégnation ayant les propriétés énoncées ci-avant dans lesquelles le principe actif est constitué par le mélange d'au moins un oligomère poly(imide-amide) thermoplastique réactif avec un co-réactif approprié.

Plus précisément, la présente invention prise dans son premier objet concerne des solutions d'imprégnation constituées d'un principe actif à base d'un oligomère réactif et d'au moins un solvant organique dudit oligomère, caractérisées par les points 1 et 2 suivants :
- point 1 : le principe actif est constitué par un mélange de A avec B dans lequel :
   * A représente au moins un oligomère poly(imide-amide) thermoplastique réactif choisi dans le groupe formé par :
      A1 : un oligomère poly(imide-amide) aromatique linéaire de formule 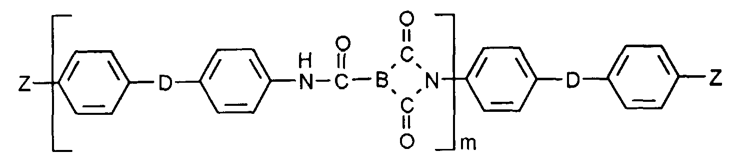 dans laquelle
         les symboles D, identiques, représentent chacun un lien valentiel simple ou un groupement 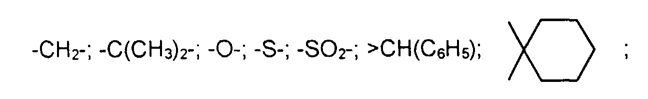 le symbole B représente un radical trivalent consistant dans un radical aromatique possédant au moins 6 atomes de carbone, substitué ou non, ou dans deux de ces radicaux reliés entre eux par un lien valentiel simple ou un groupement

         -CH₂-; -C(CH₃)₂-; -O-; >C=O;

         le symbole m représente le nombre moyen des unités de récurrence qui se situe dans l'intervalle allant de 1 à 10;
         les symboles Z, identiques, représentent chacun un radical de formule 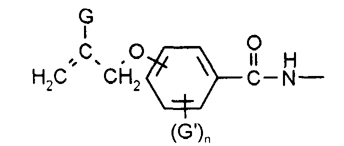 dans laquelle
         G représente un atome d'hydrogène ou un radical méthyle;
         le radical (méth)allyloxy est en position ortho, méta ou para par rapport à l'atome de carbone du cycle benzénique relié au groupe -CONH-;
         G' représente un radical méthyle;
         n est un nombre entier égale à 0, 1, 2 ou 3;
      A2: un oligomère poly(imide-amide) aromatique linéaire de la formule 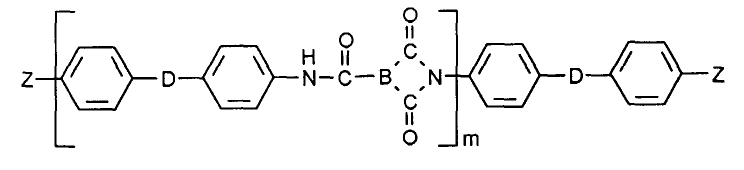 dans laquelle
         les symboles D, identiques, représentent chacun un lien valentiel simple ou un groupement 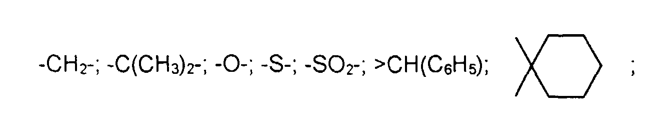 le symbole B représente un radical trivalent consistant dans un radical aromatique possédant au moins 6 atomes de carbone, substitué ou non, ou dans deux de ces radicaux reliés entre eux par un lien valentiel simple ou un groupement

         -CH₂-; -C(CH₃)₂-; -O-; >C=O;

         le symbole m représente le nombre moyen des unités de récurrence qui se situe dans l'intervalle allant de 1 à 10;
         les symboles Z, identiques, représentent chacun un radical de formule 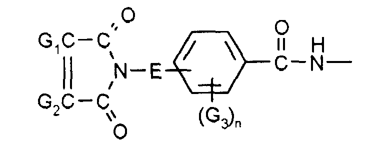 dans laquelle
         G₁ et G₂, identiques ou différents représentent chacun un atome d'hydrogène ou un radical méthyle;
         G₃ représente un radical méthyle;
         n est un nombre entier égal à 0, 1, 2 ou 3;
         E représente un lien valentiel simple ou un groupement -CH₂- et se trouve en position ortho, méta ou para par rapport à l'atome de carbone du circle benzénique relié au groupe -CONH-;
      A3: un oligomère poly(imide-amide) aromatique linéaire de la formule 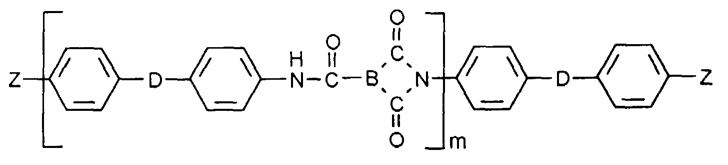 dans laquelle
         les symboles D, identiques, représentent chacun un lien valentiel simple ou un groupement 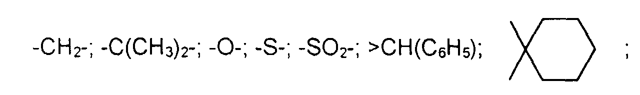 le symbole B représente un radical trivalent consistant dans un radical aromatique possédant au moins 6 atomes de carbone, substitué ou non, ou dans deux de ces radicaux reliés entre eux par un lien valentiel simple ou un groupement

         -CH₂-; -C(CH₃)₂-; -O-; >C=O;

         le symbole m représente le nombre moyen des unités de récurrence qui se situe dans l'intervalle allant de 1 à 10;
         les symboles Z représentent chacun un radical de formule 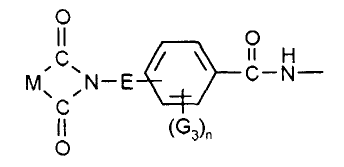 dans laquelle
         G₃ représente un radical méthyle;
         n est un nombre entier égal à 0, 1, 2 ou 3;
         E représente un lien valentiel simple ou un groupement -CH₂- et se trouve en position ortho, méta ou para par rapport à l'atome de carbone du circle benzénique relié au groupe -CONH-;
         M représente un groupement divalent 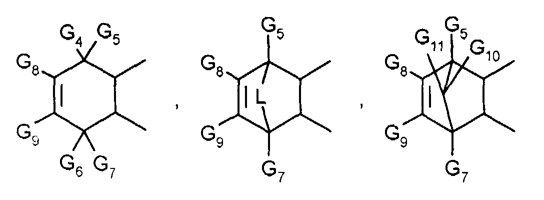 ou
         G₄, G₅, G₆, G₇, G₈, G₉, G₁₀, G₁₁, identiques ou différents, représentent chacun un atome d'hydrogène ou un radical alkyle, linéaire ou ramifié, ayant de 1 à 4 atomes et
         L représente un atome d'oxygène ou de soufre;
   * B représente un co-réactif consistant dans un ou plusieurs composé(s) à groupement imide(s) pris dans le groupe formé par:
      - B1.1 les monoimides de formule: 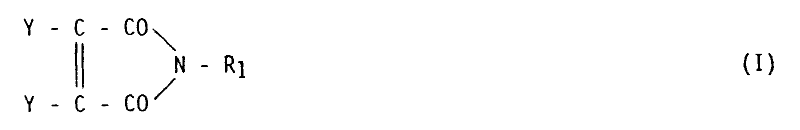 dans laquelle : les symboles Y, identiques ou différents, représentent chacun H, CH₃ ou Cl ; et R₁ représente un atome d'hydrogène ou un radical hydrocarboné monovalent, aliphatique (saturé ou non), cycloaliphatique (saturé ou non) ou aromatique renfermant jusqu'à 20 atomes de carbone, éventuellement substitué par un atome de chlore, un radical alkyoxy ou un radical alkényloxy ;
      - B1.2 les N,N'-bis-imides de formule : 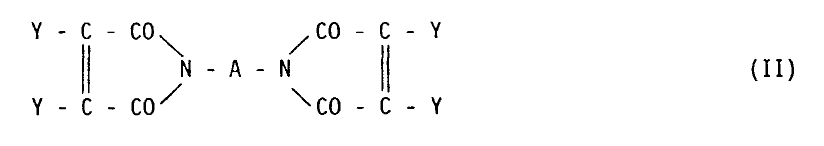 dans laquelle :
         . le symbole Y possède la signification donné ci-avant ;
         . le symbole A représente un radical divalent choisi dans le groupe constitué par les radicaux : cyclohexylènes ; phénylènes ; métyl-4 phénylène-1,3 ; méthyl-2 phénylène-1,3 ; méthyl-5 phénylène-1,3 ; diéthyl-2,5 méthyl-3 phénylène-1,4 ; et les radicaux de formule : 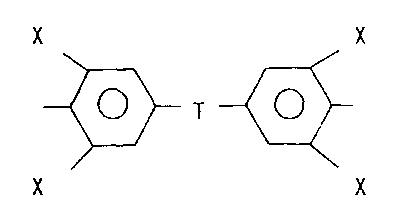 dans laquelle T représente un lien valentiel simple ou un groupement : 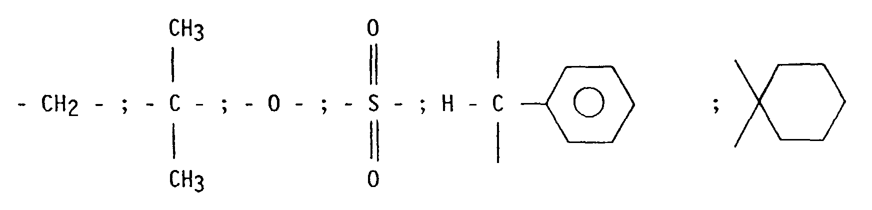 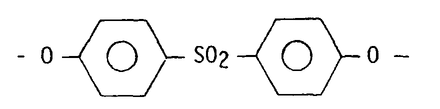 et les symboles X, identiques ou différents, représentent chacun un atome d'hydrogène, un radical méthyl, éthyle ou isopromyle ;

      B4 : un polycondensat à caractère thermoplastique phénol/formol dont le rapport molaire de formol au phénol est compris entre 0,6 et 0,95 et qui possède un point de ramollissement, de type "Bille et anneau" mesuré selon la norme NF T 51 437, allant de 50° à 110°C ;
      et B8 : un mélange des ingrédients B1 et B4 précités entre eux;
- point 2 : la concentration du principe actif, exprimée en poids du mélange A + B par rapport à l'ensemble (A + B) + solvant(s), est comprise entre 2% et 80%, et les proportions des ingrédients B1 et B4, quand ces ingrédients sont utilisés séparément ou ensemble pour concevoir le principe actif A + Bx (où x = 1 ou 4), sont les suivantes:
   - B1 : de 2 à 50%,
   - B4 : de 1 à 30%,
ces proportions exprimant le pourcentage pondéral de chaque ingrédient Bx dans l'ensemble A + Bx.

Les solvants qui conviennent bien sont les solvants polaires aprotiques. A titre d'exemples spécifiques de solvants qui conviennent, on peut citer : le dioxanne, le tétrahydrofuranne, l'oxyde de dibutyle, la méthyl-éthyl-cétone, la cyclohexanone, le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée, et un mélange de ces solvants. De manière préférentielle, le (ou les) solvant(s) mis en oeuvre sont pris dans le groupe formé par le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée, et un mélange de ces solvants.

La concentration du principe actif A + B est comprise comme on l'a vu entre 2 % et 80 %. De préférence, la quantité de solvant(s) mise en oeuvre est choisie de façon que cette concentration soit comprise entre :
- 30 % et 60 % lorsque cette solution est mise en oeuvre dans le cadre de la technique de l'enroulement filamentaire ou celle de l'imprégnation par enduction au racle ou au rideau, et
- 50 % et 80 % lorsque cette solution est mise en oeuvre dans le cadre de la technique de l'imprégnation par transfert.

Les oligomères poly(imide-amide)s thermoplastiques réactifs A1, A2 et A3 qui conviennent pour la mise en oeuvre de la présente invention sont les oligomères qui sont décrits en détail dans les demandes de brevets, déposées par la Demanderesse, ci-après mentionnées :
A1 : cf. FR-A-2 629 087 ; A2 : cf. FR-A-2 629 088 ; et A3 : cf. FR-A-2 649 712.

A titre d'exemples spécifiques d'oligomères qui conviennent, on peut citer les espèces A1, A2 et A3 qui sont obtenues par réaction directe :
. (pour les trois espèces) d'un diisocyanate aromatiques pris dans le groupe formé par :
   - le diisocyanato-4,4'-diphényl-2,2-propane,
   - le diisocyanato-4,4'-diphénylméthane,
   - le diisocyanato-4,4'-biphényle,
   - le diisocyanato-4,4'-diphénylsulfure,
   - le diisocyanato-4,4'-diphénylsulfone,
   - le diisocyanato-4,4'-diphényléther,
   - le diisocyanato-4,4'-diphényl-1,1-cyclohexane ;
. avec (pour les trois espèces) un monoanhydride d'acide tricarboxylique pris dans le groupe formé par :
   - le monoanhydride d'acide trimellique,
   - le monoanhydride-2,3 d'acide naphtalène-tricarboxylique-2,3,6,
   - le monoanhydride-1,8 d'acide naphtalène-tricarboxylique-1,8,4,
   - le monoanhydride-1,2 d'acide naphtalène-tricarboxylique-1,2,5,
   - le monoanhydride-3,4 d'acide diphényl-tricarboxylique-3,4,4',
   - le monoanhydride-3,4 d'acide diphényl-sulfone-tricarboxylique-3,4,3',
   - le monoanhydride-3,4 d'acide diphényl-éther-tricarboxylique-3,4,4',
   - le monoanhydride-3,4 d'acide benzophénone-tricarboxylique-3,4,4',
   - le monoanhydride-3,4 d'acide diphényl-isopropylidène-tricarboxylique-3,4,3' ;
. et avec un monoacide carboxylique à substituant pris dans le groupe formé par :
   * dans le cas de A1 où ledit substituant est de type alkényloxy :
      - l'acide allyloxy-2 benzoïque,
      - l'acide allyloxy-3 benzoïque,
      - l'acide allyloxy-4 benzoïque,
      - l'acide méthallyloxy-2 benzoïque,
      - l'acide méthallyloxy-3 benzoïque,
      - l'acide méthallyloxy-4 benzoïque ;
   * dans le cas de A2 où ledit substituant est de type maléimido :
      - l'acide maléimido-2 benzoïque,
      - l'acide maléimido-3 benzoïque,
      - l'acide maléimido-4 benzoïque,
      - l'acide citraconimido-2 benzoïque,
      - l'acide citraconimido-3 benzoïque,
      - l'acide citraconimido-4 benzoïque,
      - l'acide (maléimidométhyl)-4 benzoïque.
   * dans le cas de A3 où ledit substituant comprend un reste à fonction maléimide latente :
      - l'acide (tétrahydro-1,2,3,6 phtalimido)-2 benzoïque,
      - l'acide (tétrahydro-1,2,3,6 phtalimido)-3 benzoïque,
      - l'acide (tétrahydro-1,2,3,6 phtalimido)-4 benzoïque,
      - l'acide nadimido-2 benzoïque ou acide (endométhylène-3,6 tétrahydro-1,2,3,6 phtalimido)-2 benzoïque ,
      - l'acide nadimido-3 benzoïque,
      - l'acide nadimido-4 benzoïque,
      - l'acide (α-méthyl-nadimido)-2 benzoïque ou acide (méthyl-4 andométhylène-3,6 tétrahydro-1,2,3,6 phtalimido)-2 benzoïque,
      - l'acide (α-méthyl-nadimido)-3 benzoïque,
      - l'acide (α-méthyl-nadimido)-4 benzoïque,
      - l'acide (endo-oxy-3,6 tétrahydro-1,2,3,6 phtalimido)-2 benzoïque,
      - l'acide (endo-oxy-3,6 tétrahydro-1,2,3,6 phtalimido)-3 benzoïque,
      - l'acide (endo-oxy-3,6 tétrahydro-1,2,3,6 phtalimido)-4 benzoïque.

De manière préférentielle, on utilise, à titre de constituant A, au moins un oligomère choisi dans le groupe formé par les espèces A2 et A3 qui sont obtenues par réaction directe :
. (pour les deux espèces) d'un diisocyanate aromatique consistant dans le diisocyanato-4,4'-diphénylmméthane ou le diisocyanato-4,4'-diphényléther ;
. avec (pour les deux espèces) un monoanhydride d'acide tricarboxylique consistant dans le monoanhydride d'acide trimellique ;
. et avec un monoacide carboxylique à substituant consistant :
   * dans le cas de A2 : dans l'acide maléimido-4 benzoïque ;
   * dans le cas de A3 : dans l'acide nadimido-4 benzoïque ou l'acide (α-méthyl-nadimido)-4 benzoïque.

Le deuxième constituant essentiel du principe actif est un co-réactif B consistant dans un ou plusieurs ingrédient(s) choisi(s) parmi les ingrédients B1 à B8 précités.

A titre d'exemples spécifiques de monoimides B1.1 de formule (I) qui conviennent, on peut citer : le maléimide, le N-phényl-maléimide, le N-phényl-(méthyl)maléimide, le N-phényl-(chloro)maléimide, le N-(p-chloro)phényl-maléimide, le N-(p-méthoxy)phényl-maléimide, le N-allyl-maléimide, les N-(allyloxy-2,3 ou 4)phényl-maléimides.

A titre d'exemples spécifiques de bis-maléimides B1.2 de formule (II) qui conviennent, on peut citer :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N.N'-cyclohexylène-1,4-bis-maléimide,
- le N,N'-4,4'-diphényl-1,1-cyclohexane-bis-maléimide,
- le N,N'-4,4'-diphényl-2,2-propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide.

Ces bis-maléimides peuvent être préparés selon les procédés décrits dans le brevet américain US-A-3 018 290 et le brevet anglais GB-A-1 137 290.

De manière préférentielle, on utilise, à titre de co-réactif B de nature B1, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide, le N,N'-méthyl-5 phénylène-1,3-bis-maléimide et/ou le N-phényl-maléimide.

Les polycondensats B4 qui peuvent être utilisés sont bien connus. Ils sont décrits notamment dans "Encyclopedia of Polymers Science and Technology", volume 10, pages 4 et suivantes, Edition 1969 de Interscience Publihsers. Généralement, ils sont obtenus par catalyse acide et sont connus sous le nom de résine "novolaque".

De manière préférentielle, on utilise, à titre de co-réactif B de nature B4, un polycondensat phénol/formol dont le rapport molaire de formol au phénol est compris entre 0,65 et 0,85 et qui possède un point de ramollissement allant de 60° à 95°C.

S'agissant du co-réactif B de nature B8 qui est un mélange des ingrédients B1 et B4 précités entre eux, sa définition sera examinée plus en détail dans la suite du présent mémoire.

On trouvera ci-après la liste des ingrédients B1 et B4 avec les proportions qui sont préconisées quand ces ingrédients sont utilisés séparément pour concevoir le principe actif A + Bx (x = 1 ou 4 ; ces proportions expriment le pourcentage pondéral de chaque ingrédient Bx dans l'ensemble A + Bx) :
- B1 : de 2 à 50 % et, de préférence, de 10 à 40 %,

Quand le co-réactif B est un mélange B8 des ingrédients B1 et B4, la proportion qui est préconisée pour concevoir le principe actif A + B8 (cette proportion exprimant le pourcentage pondéral du mélange B8 dans l'ensemble A + B8) se situe de préférence, entre 5 et 50 %. Les proportions partielles de chaque ingrédient Bx (x = 1 ou 4) dans le mélange B8 (ces proportions exprimant le pourcentage pondéral de chaque ingrédient Bx dans l'ensemble A + Bx) :
- d'une part sont choisies dans les intervalles précités, et
- d'autre part sont déterminées de manière à ce que la proportion globale du mélange B8 (exprimant le pourcentage pondéral du mélange B8 dans l'ensemble A + B8) se situe entre les valeurs précitées, c'est-à-dire entre 5 et 50 %.

Des solutions d'imprégnation conformes à la présente invention qui sont spécialement intéressantes sont celles dans lesquelles le principe actif A + B possède les significations S1 et S4 suivantes :
* quand on souhaite obtenir une résine d'imprégnation présentant en plus (à côté des bonnes propriétés visées en matière de thermostabilité, résilience et rhéologie) une réactivité qui est augmentée :
   S1 : A représente au moins un oligomère poly(imide-amide) thermoplastique réactif choisi dans le groupe formé par les espèces A1, A2 et A3 ; B = B1, c'est-à-dire représente un ingrédient imide consistant dans un ou plusieurs composé(s) imide(s) choisi dans le groupe formé par les espèces B1.1 et B1.2 ; la proportion de B1 représente 10 à 40 % du poids du principe actif ;
   S4 : A représente au moins un oligomère choisi parmi A1, A2 et A3 ; B = B8 et représente un mélange binaire d'un ingrédient imide B1 avec un ingrédient phénolique B4 ; la proportion partielle de B1 représente 10 à 40 % du poids de l'ensemble A + B1 ; la proportion partielle de B4 représente 2 à 20 % du poids de l'ensemble A + B4 ; la proportion globale du mélange B8 = B1 + B4 représente jusqu'à 40 % du poids du principe actif ;

Les solutions d'imprégnation qui sont encore plus spécialement intéressantes sont celles dans lesquelles le principe actif A + B non seulement possède les significations S1 et S4 expliquées dans le paragraphe qui précède, mais encore est conçu à partir des constituants A et B pris cette fois sous leurs diverses formes préférées qui ont été définies ci-avant dans le présent mémoire.

La préparation des solutions d'imprégnation selon l'invention peut se faire selon plusieurs procédés.

Selon un premier procédé, on peut mélanger directement les constituants A et B, dans l'état physique où ils se trouvent naturellement, avec le (ou les) solvant(s) choisi(s) en opérant sous agitation et à une température allant de la température ambiante (23°C) à 140°C. Il convient de noter que s'il y a lieu de chauffer pour faciliter la mise en solution, la température choisie alors ne devra pas dépasser 140°C, afin d'éliminer tout risque de voir apparaître se de développer une réaction entre les constituants A et B du principe actif.

Selon une variante de ce premier procédé, les constituants A et B des solutions selon l'invention peuvent être engagés sous forme d'un pré-mélange préparé au préalable par simple malaxage, de manière connue en soi, à une température allant de la température ambiante (23°C) à 50°C, desdits constituants dans l'état physique où ils se trouvent naturellement. A noter que les mélanges A + B, pris en tant que produit-per-se, constituent aussi de la matière nouvelle et il s'agit là du deuxième objet qui est concerné par la présente invention.

Selon un second procédé, qui correspond à une modalité de mise en oeuvre préférentielle de la présente invention, les solutions d'imprégnation peuvent être préparées en mélangeant directement, en opérant sous agitation et à une température allant de la température ambiante (23°C) à 140°C, le co-réactif B avec la solution réactionnelle brute telle qu'elle est obtenue à l'issue du procédé de préparation des oligomères poly(imide-amide)s réactifs A conduit en milieu solvant(s) polaire(s) aprotique(s) ; pour avoir plus de détails sur ce type de procédé, on se reportera aux contenus des demandes de brevets précitées qui ont été déposées par la Demanderesse (FR-A-2 629 087, FR-A-2 629 088 et FR-A-2 649 712). Dans le cas de la mise en oeuvre d'un constituant A consistant dans plusieurs oligomères poly(imide-amide)s réactifs, le co-réactif B sera alors mélangé avec l'ensemble des solutions brutes de préparation correspondantes. Lorsque le co-réactif B est le mélange B8, on peut par exemple opérer en mélangeant une première fraction de co-réactif B, engagée éventuellement sous forme de solution, avec l'ensemble formé par (i) la (ou les) solution(s) réactionnelle(s) brute(s) renfermant le constituant A et (2i) la fraction résiduelle de co-réactif B. A noter que dans tous les cas on devra veiller, au besoin en faisant les ajustements adéquats, à ce que la concentration du principe actif A + B dans la solution finale d'imprégnation soit bien comprise dans les intervalles précités.

Les solutions conformes à la présente invention peuvent être utilisées pour la préparation de revêtements, de collages, de matériaux stratifiés dont le squelette peut être sous forme de nappes tissées ou non tissées, d'éléments unidirectionnels ou de fibres coupées naturelles ou synthétiques tels que par exemple les filaments ou fibres de verre, de bore, de carbone, de tungstène, de silicium ou de polyamide aromatique.

Les solutions selon la présente invention présentent un intérêt tout particulier pour l'obtention d'articles intermédiaires pré-imprégnés. L'imprégnation du matériau fibreux peut être effectuée par application des techniques usuelles telles que l'immersion, l'enduction au racle ou au rideau ou l'imprégnation par transfert. Le film transférable et les articles pré-imprégnés peuvent être utilisés directement ou bien être emmagasinés en vue d'un emploi ultérieur ; ils conservent remarquablement leurs propriétés au cours d'un stockage entre 0°C et 25°C.

Les matériaux pré-imprégnés sont utilisables pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de pré-imprégnés sur une forme ou un support.

On effectue ensuite la réticulation dans les conditions technologiques habituelles relatives aux matériaux composites et en particulier à des températures comprises entre 180 et 300°C.

On peut utiliser aussi les pré-imprégnés comme renforts ou moyens de réparation de pièces détériorées.

Mais il est aussi possible de concevoir des pièces selon la technique de l'enroulement filamentaire avec ou sans support, destinées à la réalisation de pièces de révolution, technique utilisée notamment pour faire des pièces relevant des industries automobile et aéronautique.

Les exemples qui suivent illustrent de manière non limitative comment la présente invention peut être mise en pratique.

### EXEMPLE 1

### 1. Exemple de mise en oeuvre de la présente invention :

Dans un réacteur en verre de 1 litre, muni d'un agitateur de type ancre en acier inoxydable, on charge à température ambiante (23°C) :
- 560 g de la solution réactionnelle brute obtenue à l'issue du procédé de préparation d'un oligomère poly(imide-amide) A3 conduit au sein de la N-méthyl-pyrrolidone-2 comme solvant, à partir du diisocyanato-4,4'-diphénylméthane, du monoanhydride d'acide trimellique et de l'acide nadimido-4 benzoïque ; cette solution réactionnelle brute présente une concentration en oligomère A3 de 45 % en poids ;
- 63 g de N,N'-4,4'-diphénylméthane-bis-maléimide (co-réactif B de nature B1.2), et
- 77 g de N-méthyl-pyrrolidone-2.

Le mélange est agité et, à l'aide d'un bain d'huile thermostaté, sa température est portée de 23°C à 80°C en 30 minutes ; le mélange est ensuite maintenu sous agitation à 80°C pendant 15 autres minutes. Le collodion ou solution ainsi obtenu est homogène : il présente une concentration en principe actif (A3 + B1.2) de 45 % en poids et sa viscosité à 50°C est de 1,31 Pa.s.

La viscosité dont on parle ici est la viscosité dynamique ; elle est mesurée à 50° +/- 0,1°C avec un viscosimètre RHEOMAT 30 de la Société CONTRAVES, équipé d'un mobile tournant sous un gradiant de 30 s⁻¹.

A l'aide d'une machine à imprégner selon la technique de l'enroulement filamentaire, on prépare des pré-imprégnés en utilisant comme fibres de renfort, des fibres de carbone fabriquées par la Société SOFICAR sous la référence TORAYCA T 300 3K 4 OB.

L'unité d'imprégnation comprend essentiellement une bobine d'alimentation des fibres, un bac avec un tambour d'imprégnation et un tambour de stockage des nappes à base de fibres imprégnées. Le bac contenant la solution d'imprégnation est chauffé à l'aide d'un fluide caloporteur thermorégulé, circulant dans une double enveloppe, de manière à porter la température du collodion à 47°C. Le tambour d'imprégnation trempe dans le collodion, un racle permettant de régler l'épaisseur du film de collodion sur ce tambour en rotation. Guidée par des poulies, la mèche de fibres de carbone passe sur le tambour d'imprégnation, puis s'enroule sur le tambour de stockage recouvert d'un papier revêtu d'un enduit silicone anti-adhérent. C'est la rotation du tambour de stockage qui assure le déplacement de la mèche à raison de 14 mètres/minute. Située après la bobine d'alimentation des fibres, une poulie solidaire d'un bras régulateur permet de régler la tension de la mèche de fibres à 7 Newtons. Un dispositif permet le déplacement de la mèche imprégnée le long de la surface du tambour ; ce dispositif est programmé de façon à obtenir, à l'issue de chaque opération, une nappe imprégnée de 125 cm de long (circonférence du tambour) sur 11 cm de large. La nappe ainsi obtenue est constituée par un renfort unidirectionnel comportant par m² : 200 g de fibres de carbone et 270 g de collodion.

On prépare de cette manière plusieurs nappes imprégnées qui sont conservées entre deux feuilles de papier revêtu d'un enduit silicone anti-adhérent. Ensuite, ces nappes positionnées entre deux feuilles de tissu de verre traité à l'aide de téflon, sont séchées en étuve ventilée à 140°C pendant 20 minutes.

Au départ de 4 nappes, on découpe ensuite 16 bandes ou (pré-imprégnés) de 24 cm x 11 cm qui vont servir à préparer un stratifié par application de la technique dite du "moulage au sac". Selon cette technique, on réalise l'empilement sur une plaque en acier inoxydable des éléments suivants (en allant du bas vers le haut) : 3 tissus de verre (commercialisé par la Société PORCHER sous la référence 7628) ; puis 1 tissu de verre traité à l'aide de téflon (commercialisé par la Société FOTHERGILL-TYGAFLOR sous la dénomination TYGAVAC TFG 075F) ; puis les 16 pré-imprégnés de 24 cm x 11 cm ; puis 1 tissu de verre traité à l'aide de téflon ; puis 3 tissus de verre ; puis 3 tissus de verre ; puis 1 membrane perforée (commercialisée par la Société AIRTECH sous la dénomination WRIGHTLON 4600) ; et enfin 2 mâts de verre (commercialisé par la Société AIRTECH sous la dénomination AIRWEAVE UHT 800). Une vessie en polyimide de marque KAPTON, qui coiffe cet empilement, est fixée à sa partie inférieure sur la plaque métallique à l'aide d'un mastic adhésif commercialisé par la société GENERAL SEALANTS sous la dénomination 300 S. Une ouverture pratiquée dans la plaque métallique permet l'établissement d'une pression réduite de l'espace, contenant l'empilement, située sous la vessie. L'ensemble est placé dans un autoclave, et on applique le cycle de cuisson suivant :
- Cycle de températures :
   . montée à 220°C à raison de 2°C/min,
   . palier à 220°C : 1 heure,
   . montée de 220° à 250°C à raison de 2°C/min,
   . palier à 250°C : 15 heures,
   . refroidissement à 23°C à raison de 3°C/min ;
- Cycle de pression :
   . pression réduite égale à 10⁴ Pa établie à l'intérieur du sac depuis le début du cycle de température et maintenue jusqu'à la fin d'une période de 1 heure après le début du palier à 250°C,
   . pression de 10⁶ Pa établie dans l'autoclave 15 minutes après le début du palier à 220°C et maintenue jusqu'à la fin du refroidissement.

Le stratifié ainsi préparé est recuit pendant 5 heures à 300°C.

Les tests mécaniques effectués sur ce stratifié donnent les résultats suivants :
- propriétés en flexion, selon la norme ASTM D 790 M : on trouve un module de flexion (Mf) de 105 GPA ;
- propriétés de ténacité :
   . on trouve une résistance à la rupture en cisaillement interlaminaire (ILSS), selon la norme ASTM D 2733, de 90 MPa ;
   . on trouve une énergie de propagation de fissure (GlC), de 750 J/m² ; cette grandeur est mesurée selon le protocole défini le "European Group of Fracture Polymer and Composites Task Group" dans l'ouvrage intitulé "A protocol for interlaminar fracture testing of composites", 1988, P. DAVIES, EPLF, Switzerland.
- la température de transition vitreuse (Tg) de la résine d'imprégnation durcie est de 310°C. La température de transition vitreuse (Tg) correspond à la chute brutale du module d'élasticité en fonction de la température. Elle peut être déterminée sur le graphique représentant les variations du module d'élasticité en fonction de la température, variations mesurées par analyse mécanique dynamique, à l'aide d'un appareil DMA DUPONT modèle 982, à une vitesse de montée en température de 3°C/min. Les éprouvettes sont conditionnées à EHO (Etat Hygrométrique Zéro) c'est-à-dire qu'elles sont placées en dessicateur sur silicagel et séchées 24 heures à température ambiante sous 0,66 - 1,33.10² Pa avant de réaliser les mesures.

### 2. Procédé de préparation de l'oligomère poly(imide-amide) A3 fonctionnalisé par des groupes nadimido :

Dans un réacteur en verre en acier inoxydable de 25 litres, muni d'une agitation centrale de type hélice, d'un réfrigérant ascendant et d'un système de chauffage par double enveloppe où circule un fluide caloporteur, ce réacteur étant maintenu sous une légère surpression d'azote sec, on introduit successivement à température ambiante (23°C) :
- 8 549 g de N-méthyl-pyrrolidone-2,
- 2 688 g (14 moles) de monoanhydride d'acide trimellique,
- 1 585 g (5,6 moles) d'acide nadimido-4 benzoïque, et
- 4 200 g (16,8 moles) de diisocyanato-4,4'-diphénylméthane.

La masse réactionnelle est agitée pendant 20 minutes à température ambiante. Ensuite, l'agitation est poursuivie en suivant le protocole de montée en température ci-après indiqué :
- montée à 100°C en 1 heure 15 minutes, et
- palier à 100°C pendant 5 heures 30 minutes.

La solution de poly(imide-amide) ainsi obtenue est une masse liquide ayant un poids de 15 543 g ; elle présente une concentration en oligomère A3 de 45 % en poids.

La structure de l'oligomère A3 répond essentiellement à la formule suivante : 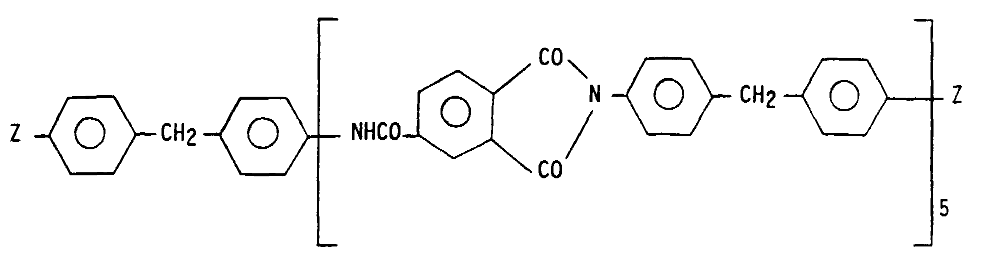 dans laquelle :

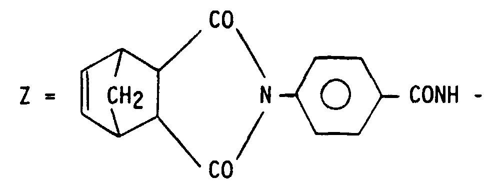

### EXEMPLE 2

Dans le même appareillage que celui décrit à l'exemple 1, on charge à température ambiante (23°C) :
- 15 g d'un polycondensat phénol/formol dont le rapport molaire de formol au phénol est de 0,7 et qui possède un point de ramollissement (selon la technique "Bille et anneau" et la norme NF T 51 437) de 90°C, commercialisé par la Société PERSTORP SA sous la référence 853628 (co-réactif B de nature B4), et
- 91,7 g de N-méthyl-pyrrolidone-2.

Après dissolution à 80°C, on ajoute :
- 533,3 g de la solution réactionnelle brute d'oligomère poly(imide-amide) A3 décrite à l'exemple 1, et
- 60 g de N,N'-4,4'-diphénylméthane-bis-maliéimide (co-réactif B de nature B1.2).

Le mélange est agité 40 minutes en portant la température de 35°C à 80°C, puis 15 autres minutes à 80°C. Le collodion obtenu est homogène : il présente une concentration en principe actif (A3 + B1.2 + B4) de 45 % en poids et sa viscosité à 50°C est de 1,23 Pa.s.

On prépare ensuite un stratifié en utilisant les mêmes techniques (celles de l'enroulement filamentaire et du moulage au sac) et le même renfort (fibres de carbone) que ceux utilisés dans l'exemple 1.

A noter cependant les petites différences suivantes de mise en oeuvre :
- au niveau de la préparation des nappes imprégnées :
   . le dépôt de collodion est de 250 g/m² ;
- au niveau de la stratification :
   . la pression de 10⁶ Pa qui est établie dans l'autoclave est appliquée 30 minutes après le début du palier à 220°C.

Le statifié ainsi préparé est recuit pendant 5 heures à 300°C.

Les tests mécaniques effectués sur ce stratifié donnent les résultats suivants :
- Mf : 105 GPa,
- ILSS : 90 MPa,
- GlC : 690 J/m²,
- Tg : 290°C.

## Revendications

1. Solutions d'imprégnation constituées d'un principe actif à base d'un oligomère réactif et d'au moins un solvant organique dudit oligomère, caractérisées par le points 1 et 2 suivants:
- point 1 : le principe actif est constitué par un mélange de A avec B dans lequel:
* A représente au moins un oligomère poly(imide-amide) thermoplastique réactif choisi dans le groupe formé par:
A1: un oligomère poly(imide-amide) aromatique linéaire de formule 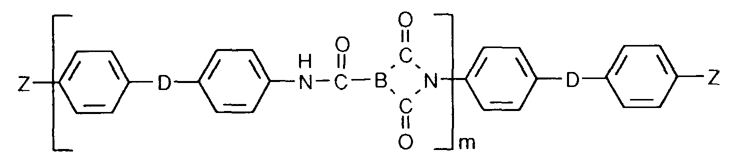 dans laquelle
les symboles D, identiques, représentent chacun un lien valentiel simple ou un groupement 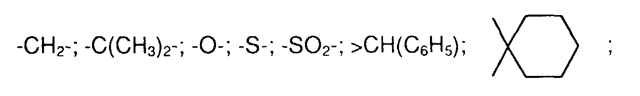 le symbole B représente un radical trivalent consistant dans un radical aromatique possédant au moins 6 atomes de carbone, substitué ou non, ou consistant dans deux de ces radicaux reliés entre eux par un lien valentiel simple ou un groupement
-CH₂-; -C(CH₃)₂-; -O-; >C=O;
le symbole m représente le nombre moyen des unités de récurrence qui se situe dans l'intervalle allant de 1 à 10;
les symboles Z, identiques, représentent chacun un radical de formule 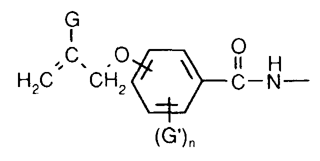 dans laquelle
G représente un atome d'hydrogène ou un radical méthyle;
le radical (méth)allyloxy est en position ortho, méta ou para par rapport à l'atome de carbone du cycle benzénique relié au groupe -CONH-;
G' représente un radical méthyle;
n est un nombre entier égale à 0, 1, 2 ou 3;
A2: un oligomère poly(imide-amide) aromatique linéaire de formule 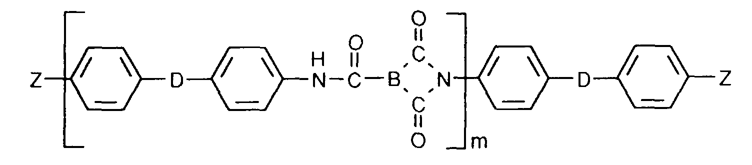 dans laquelle
les symboles D, identiques, représentent chacun un lien valentiel simple ou un groupement 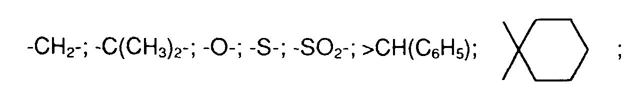 le symbole B représente un radical trivalent consistant dans un radical aromatique possédant au moins 6 atomes de carbone, substitué ou non, ou consistant dans deux de ces radicaux reliés entre eux par un lien valentiel simple ou un groupement
-CH₂-; -C(CH₃)₂-; -O-; >C=O;
le symbole m représente le nombre moyen des unités de récurrence qui se situe dans l'intervalle allant de 1 à 10;
les symboles Z, identiques, représentent chacun un radical de formule 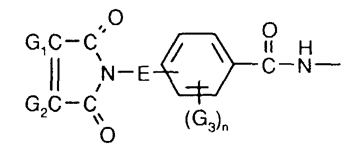 dans laquelle
G₁ et G₂, identiques ou differents, représentent chacun un atome d'hydrogène ou un radical méthyle;
G₃ représente un radical méthyle;
n est un nombre entier égal à 0, 1, 2 ou 3;
E représente un lien valentiel simple ou un groupement -CH₂- et se trouve en position ortho, méta ou para par rapport à l'atome de carbone du cycle benzénique relié au groupe -CONH-;
A3: un oligomère poly(imide-amide) aromatique linéaire de formule 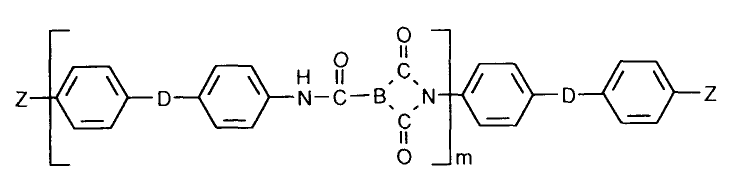 dans laquelle
les symboles D, identiques, représentent chacun un lien valentiel simple ou un groupement 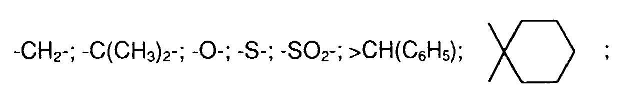 le symbole B représente un radical trivalent consistant dans un radical aromatique possédant au moins 6 atomes de carbone, substitué ou no, ou dans deux de ces radicaux reliés entre eux par un lien valentiel simple ou un groupement
-CH₂-; -C(CH₃)₂-; -O-; >C=O;
le symbole m représente le nombre moyen des unités de récurrence qui se situe dans l'intervalle allant de 1 à 10;
les symboles Z représentent chacun un radical de formule 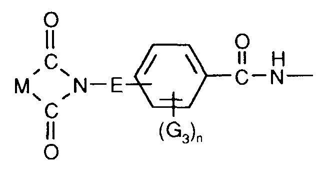 dans laquelle
G₃ représente un radical méthyle;
n est un nombre entier égal à 0, 1, 2 ou 3;
E représente un lien valentiel simple ou un groupement -CH₂- et se trouve en position ortho, méta ou para par rapport à l'atome de carbone du cycle benzénique relié au groupe -CONH-;
M représente un groupement divalent 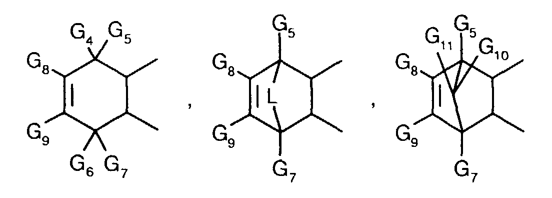 ou
G₄, G₅, G₆, G₇, G₈, G₉, G₁₀, G₁₁, identiques ou différents, représentent chacun un atome d'hydrogène ou un radical alkyle, linéaire ou ramifié, ayant de 1 à 4 atomes de carbone et L représente un atome d'oxygène ou de soufre;
* B représente un co-reactif consistant dans un ou plusieurs composé(s) à groupement imide(s) pris dans le groupe formé par:
- B1.1 les monoimides de formule: 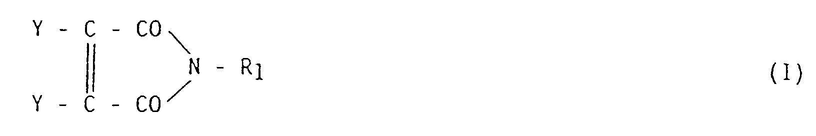 dans laquelle : les symboles Y, identiques ou différents, représentent chacun H, CH₃ ou Cl ; et R₁ représente un atome d'hydrogène ou un radical hydrocarboné monovalent, aliphatique (saturé ou non), cycloaliphatique (saturé ou non) ou aromatique renfermant jusqu'à 20 atomes de carbone, éventuellement substitué par un atome de chlore, un radical alkyoxy ou un radical alkényloxy ;
- B1.2 les N,N'-bis-imides de formule : 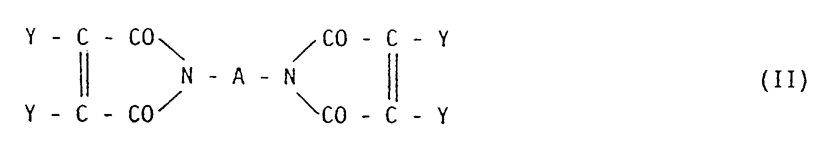 dans laquelle :
. le symbole Y possède la signification donné ci-avant ;
. le symbole A représente un radical divalent choisi dans le groupe constitué par les radicaux : cyclohexylènes ; phénylènes ; métyl-4 phénylène-1,3 ; méthyl-2 phénylène-1,3 ; méthyl-5 phénylène-1,3 ; diéthyl-2,5 méthyl-3 phénylène-1,4 ; et les radicaux de formule : 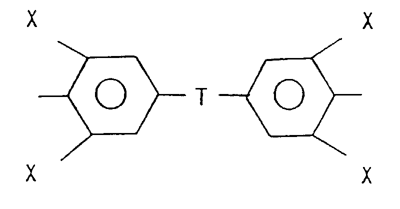 dans laquelle T représente un lien valentiel simple ou un groupement : 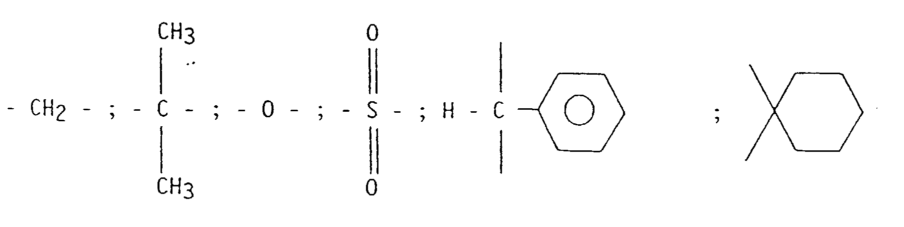 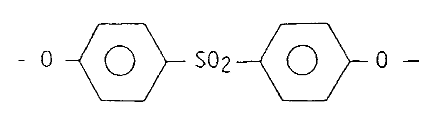 et les symboles X, identiques ou différents, représentent chacun un atome d'hydrogène, un radical méthyl, éthyle ou isopromyle ;
B4 : un polycondensat à caractère thermoplastique phénol/formol dont le rapport molaire de formol au phénol est compris entre 0,6 et 0,95 et qui possède un point de ramollissement, de type "Bille et anneau" mesuré selon la norme NF T 51 437, allant de 50° à 110°C ;
et B8 : un mélange des ingrédients B1 et B4 précités entre eux;
- point 2 : la concentration du principe actif, exprimée en poids du mélange A + B par rapport à l'ensemble (A + B) + solvant(s), est comprise entre 2% et 80%, et les proportions des ingrédients B1 et B4, quand ces ingrédients sont utilisés séparément ou ensemble pour concevoir le principe actif A + Bx (où x = 1 ou 4), sont les suivantes:
- B1 : de 2 à 50%,
- B4 : de 1 à 30%,
ces proportions exprimant le pourcentage pondéral de chaque ingrédient Bx dans l'ensemble A + Bx.

2. Solutions selons la revendication 1, caractérisées en ce que l'on utilise, à titre de constituant A, au moins un oligomère choisi dans le groupe formé par les espèces A2 et A3 qui sont obtenues par réaction directe :
- (pour les deux espèces) d'un diisocyanate aromatique consistant dans le diisocyanato-4,4'-diphénylméthane ou le diisocyanato-4,4'-diphényléther ;
- avec (pour les deux espèces) un monoanhydride d'acide tricarboxylique consistant dans le monoanhydride d'acide trimellique ;
- et avec un monoacide carboxylique à substituant consistant :
* dans le cas de A2 : dans l'acide maléimido-4 benzoïque ;
* dans le cas de A3 : dans l'acide nadimido-4 benzoïque ou l'acide (α-méthyl-nadimido)-4 benzoïque.

3. solutions selon l'une des revendications 1 et 2, caractérisées en ce que l'on utilise, à titre de co-réactif B de nature B1, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide, le N,N'-méthyl-5 phénylène-1,3-bis-maléimide et/ou le N-phényl-maléimide.

4. Solutions selon l'une quelconque des revendications 1 à 3, caractérisées en ce que l'on utilise, à titre de co-réactif B de nature B4, un polycondensat phénol/formol dont le rapport molaire de formol au phénol est compris entre 0,65 et 0,85 et qui possède un point de ramollissement allant de 60° à 95°C.

5. Solutions selon l'une quelconque des revendications 1 à 4, caractérisées en ce que le co-réactif B est un mélange B8.

6. Solutions selon l'une quelconque des revendications 1 à 5, caractérisées en ce que le principe actif A + B possède la signification S1 suivante :
A représente au moins un oligomère poly(imide-amide) thermoplastique réactif choisi dans le groupe formé par les espèces A1, A2 et A3 ; B = B1, c'est-à-dire représente un ingrédient imide consistant dans un ou plusieurs composé(s) imide(s) choisi dans le groupe formé par les espèces B1.1 et B1.2 ; la proportion de B1 représente 10 à 40 % du poids du principe actif.

7. Solutions selon la revendication 5, caractérisées en ce que le principe actif A + B possède la signification S4 suivante :
A représente au moins un oligomère choisi parmi A1, A2 et A3 ; B = B8 et représenté un mélange binaire d'un ingrédient imide B1 avec un ingrédient phénolique B4 ; la proportion partielle de B1 représente 10 à 40 % du poids de l'ensemble A + B1 ; la proportion partielle de B4 représente 2 à 20 % du poids de l'ensemble A + B4 ; la proportion qlobale du mélange B8 = B1 + B4 représente jusqu'à 40% du poids du principe actif.

8. Solutions selon l'une quelconque des revendications 1 à 7, caractérisées en ce que les solvants mis en oeuvre sont pris dans le groupe formé par : le N,N-diméthyl-acétamide, le N,N-diméthylformamide, la N-méthyl-pyrrolidone-2, le.diméthyl-sulfoxyde, la tétraméthyl-1,1,3,3 urée, la diméthyl-1,3 urée, et un mélange de ces solvants.

9. Procédé de préparation des solutions selon l'une quelconque des revendications 1 à 8, caractérisé en ce que l'on mélange directement les constituants A et B avec le (ou les) solvant(s) choisi(s) en opérant sous agitation et à une température allant de la température ambiante (23°C) à 140°C, les constituants A et B -dans l'état physique où ils se trouvent naturellement- étant engagés séparément ou sous forme d'un pré-mélange préparé au préalable par simple malaxage des constituants à une température allant de la température ambiante (23°C) à 50°C.

10. Procédé de préparation des solutions selon l'une quelconque des revendications 1 à 8, caractérisé en ce que l'on mélange directement, en opérant sous agitation et à une température allant de la température ambiante (23°C) à 140°C, le co-réactif B avec au moins une solution réactionnelle brute telle qu'elle est obtenue à l'issue du procédé de préparation des oligomères poly(imide-amide)s réactifs A conduit en milieu solvant(s) polaire(s) aprotique(s).

11. Utilisation des solutions selon l'une quelconque des revendications 1 à 8, pour la fabrication d'articles intermédiaires pré-imprégnés en appliquant la technique de l'enroulement filamentaire ou celle de l'imprégnation de matériaux fibreux divers.

## Patentansprüche

1. Imprägnierungslösungen, bestehend aus einem aktiven Prinzip auf Basis eines reaktiven Oligomeren und mindestens einem organischen Lösungsmittel dieses Oligomeren, gekennzeichnet durch die folgenden Punkte 1 und 2:
Punkt 1: Das aktive Prinzip besteht aus einem Gemisch von A mit B, worin:
* A mindestens ein reaktives thermoplastisches Poly-(imid-amid)-oligomeres bedeutet, ausgewählt aus der Gruppe gebildet aus:
A1: einem linearen aromatischen Poly-(imid-amid)-oligomeren der Formel 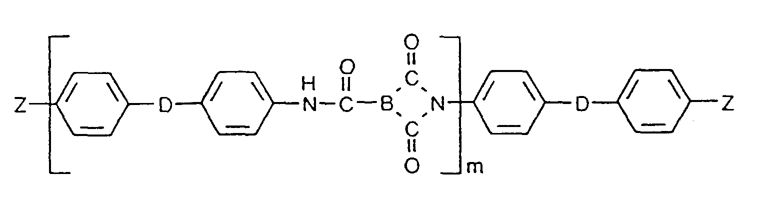 worin
die Symbole D, die identisch sind, jeweils eine einfache Valenzbindung oder eine Gruppe 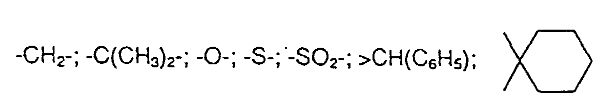 bedeuten;
das Symbol B bedeutet einen dreiwertigen Rest, bestehend aus einem aromatischen Rest, der mindestens sechs Kohlenstoffatome besitzt, substituiert oder nichtsubstituiert, oder aus zwei dieser Reste, die untereinander verbunden sind durch eine einfache Valenzbindung oder eine Gruppe
-CH₂-;-C(CH₃)₂-;-O-;>C=O;
das Symbol m bedeutet die mittlere Anzahl der wiederkehrenden Einheiten, die in dem Bereich von 1 bis 10 liegt;
die Symbole Z, die identisch sind, bedeuten jeweils einen Rest der Formel 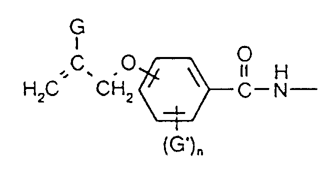 worin
G ein Wasserstoffatom oder einen Methylrest darstellt;
der Rest (Meth)allyloxy ist in ortho-, meta- oder para-Stellung in bezug auf das Kohlenstoffatom des Benzolkerns, das an die Gruppe -CONH- gebunden ist;
G' bedeutet einen Methylrest;
n ist eine ganze Zahl gleich 0, 1, 2 oder 3;
A2: einem linearen aromatischen Poly-(imid-amid)-oligomeren der Formel 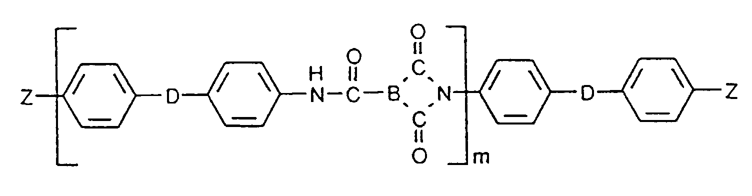 worin
die Symbole D, die identisch sind, jeweils eine einfache Valenzbindung oder eine Gruppe 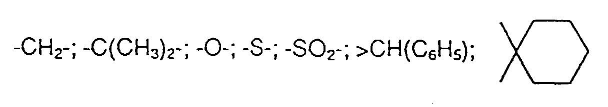 bedeuten,
das Symbol B bedeutet einen dreiwertigen Rest, bestehend aus einem aromatischen Rest, der mindestens 6 Kohlenstoffatome besitzt, substituiert oder nichtsubstituiert, oder bestehend aus zwei dieser Reste, die untereinander durch eine einfache Valenzbindung verbunden sind, oder eine Gruppe
-CH₂-; -C(CH₃)₂-; -O-; >C=O
verbunden sind,
das Symbol m bedeutet die mittlere Anzahl der wiederkehrenden Einheiten, die in dem Bereich von 1 bis 10 liegt;
die Symbole Z, die identisch sind, bedeuten jeweils einen Rest der Formel 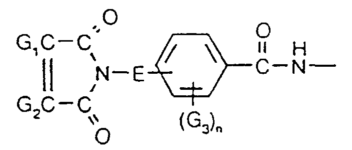 worin
G₁ und G₂, die identisch oder verschieden sind, jeweils ein Wasserstoffatom oder einen Methylrest darstellen;
G₃ bedeutet einen Methylrest;
n ist eine ganze Zahl gleich 0, 1, 2 oder 3;
E bedeutet eine einfache Valenzbindung oder eine Gruppe -CH₂- und befindet sich in ortho-, meta- oder para-Stellung in bezug auf das Kohlenstoffatom des Benzolrings, das an die Gruppe -CONH- gebunden ist;
A3: einem linearen aromatischen Poly-(imid-amid)-oligomeren der Formel 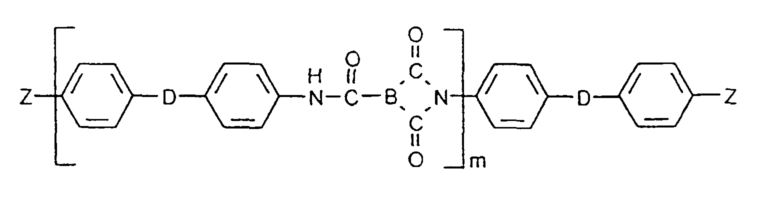 worin
die Symbole D, die identisch sind, jeweils eine einfache Valenzbindung oder eine Gruppe 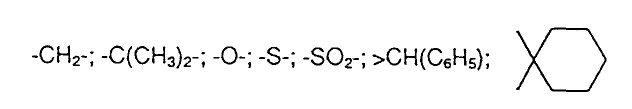 bedeuten;
das Symbol B bedeutet einen dreiwertigen Rest, bestehend aus einem aromatischen Rest, der mindestens 6 Kohlenstoffatome besitzt, substituiert oder nichtsubstituiert, oder aus zwei dieser Reste, die untereinander durch eine einfache Valenzbindung oder eine Gruppe
-CH₂-; -C(CH₃)₂-; -O-; >C=O
verbunden sind;
das Symbol m bedeutet die mittlere Anzahl der wiederkehrenden Einheiten, die in dem Bereich von 1 bis 10 liegt;
die Symbole Z bedeuten jeweils einen Rest der Formel 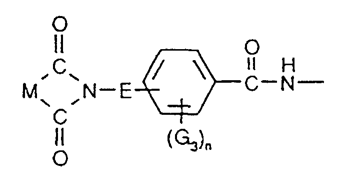 worin
G₃ einen Methylrest bedeutet;
n ist eine ganze Zahl gleich 0, 1, 2 oder 3;
E bedeutet eine einfache Valenzbindung oder eine Gruppe -CH₂- und befindet sich in ortho-, meta- oder para-Stellung in bezug auf das Kohlenstoffatom des Benzolrings,das mit der Gruppe -CONH- verbunden ist;
M bedeutet eine zweiwertige Gruppe 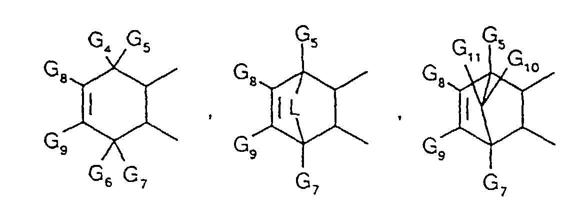 oder
G₄, G₅, G₆, G₇, G₈, G₉, G₁₀, G₁₁, die identisch oder verschieden sind, bedeuten jeweils ein Wasserstoffatom oder einen linearen oder verzweigten Alkylrest mit 1 bis 4 Kohlenstoffatomen, und L bedeutet ein Sauerstoff- oder Schwefelatom;
* B bedeutet ein Co-Reagens bestehend aus einer oder mehreren Verbindung(en) mit Imidgruppen, genommen aus der Gruppe gebildet aus:
B1.1 den Monoimiden der Formel: 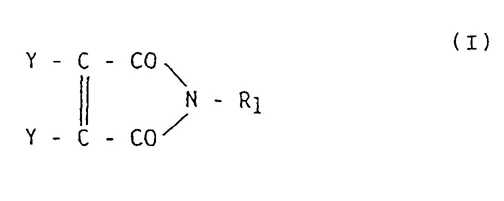 worin
die Symbole Y, die identisch oder verschieden sind, jeweils H, CH₃ oder Cl bedeuten; und
R₁ bedeutet ein Wasserstoffatom oder einen einwertigen aliphatischen (gesättigt oder nichtgesättigt), cycloaliphatischen (gesättigt oder nichtgesättigt), oder aromatischen Kohlenwasserstoffrest mit bis zu 20 Kohlenstoffatomen, gegebenenfalls substituiert durch ein Chloratom, einen Alkyloxyrest oder einen Alkenyloxyrest;
B1.2 den N,N'-Bisimiden der Formel: 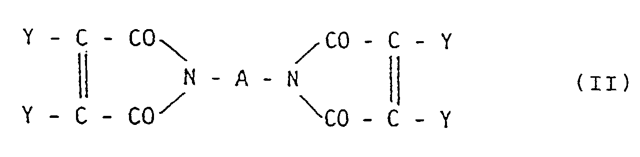 worin:
das Symbol Y die vorstehend angegebene Bedeutung besitzt;
das Symbol A bedeutet einen zweiwertigen Rest, ausgewählt aus der Gruppe bestehend aus den Resten: Cyclohexylen, Phenylen; 4-Methyl-1,3-phenylen; 2-Methyl-1,3-phenylen; 5-Methyl-1,3-phenylen; 2,5-Diethyl-3-methyl-1,4-phenylen; und den Resten der Formel: 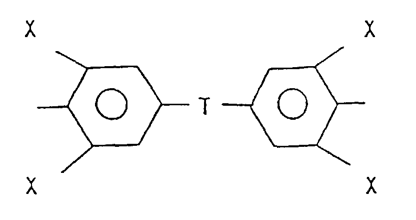 worin
T eine einfache Valenzbindung oder eine Gruppe 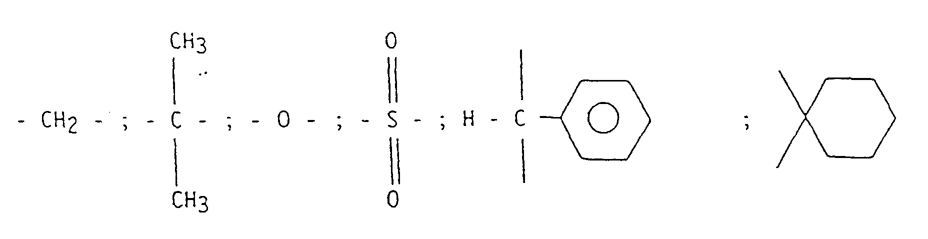 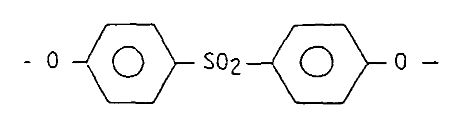 bedeutet, und
die Symbole X, die identisch oder verschieden sind, jeweils ein Wasserstoffatom, einen Methyl-, Ethyl- oder Isopropyl- bzw.Isopromylrest bedeuten;
B4: ein Phenol/Formol-Polykondensat mit thermoplastischem Charakter, dessen Molverhältnis von Formol zu Phenol zwischen 0,6 und 0,95 liegt und das einen Erweichungspunkt vom Typ "Kugel und Ring", gemessen nach der Norm NF T 51 437, von 50 °C bis 110 °C geht; und
B8: ein Gemisch der vorerwähnten Bestandteile B1 und B4 untereinander;
Punkt 2: Die Konzentration des aktiven Prinzips, ausgedrückt in Gewicht des Gemisches A + B in bezug auf die Gesamtheit (A + B) + Lösungsmittel(n), ist zwischen 2 % und 80 % gelegen, und die Verhältnisse der Bestandteile B1 und B4, wenn diese Bestandteile getrennt oder zusammen verwendet werden, um das aktive Prinzip A + Bx (wobei x = 1 oder 4 ist) zu entwickeln, sind die folgenden:
B1: von 2 % bis 50 %
B4: von 1 % bis 30 %,
wobei diese Verhältnisse die Gewichtsprozente jedes Bestandteils Bx in der Gesamtheit A + Bx ausdrücken.

2. Lösungen gemäß Anspruch 1, dadurch gekennzeichnet, daß man als Bestandteil A mindestens ein Oligomeres ausgewählt aus der Gruppe gebildet durch die Arten A2 und A3 verwendet, die erhalten sind durch direkte Reaktion:
. (für die zwei Arten) eines aromatischen Diisocyanats, bestehend aus 4,4'-Diisocyanato-diphenylmethan oder dem 4,4'-Diisocyanato-diphenylether;
. mit (für die zwei Arten) einem Tricarbonsäuremonoanhydrid, bestehend aus dem Trimellitsäuremonoanhydrid; und
. mit einer Monocarbonsäure mit Substituenten, bestehend aus:
* im Falle von A2: der 4-Maleimidobenzoesäure;
* im Falle von A3: aus der 4-Nadimidobenzoesäure oder der 4-(α-Methylnadimido)-benzoesäure.

3. Lösungen gemäß einem der Ansprüche 1 und 2, dadurch gekennzeichnet, daß man als Co-Reaktiv B der Natur B1, das N,N'-4,4'-Diphenylmethanbismaleimid allein oder im Gemisch mit dem N,N'-2-Methyl-1,3-phenylenbismaleimid, dem N,N'-4-Methyl-1,3-phenylenbismaleimid, dem N,N'-5-Methyl-1,3-phenylenbismaleimid und/oder dem N-Phenylmaleimid verwendet.

4. Lösungen gemäß einem der Ansprüche 1 bis 3, dadurch gekennzeichnet, daß man als Co-Reaktiv B der Natur B4 ein Phenol/Formol-Polykondensat verwendet, dessen Molverhältnis von Formol zu Phenol zwischen 0,65 und 0,85 liegt, und das einen Erweichungspunkt von 60 °C bis 95 °C aufweist.

5. Lösungen gemäß einem der Ansprüche 1 bis 4, dadurch gekennzeichnet, daß das Co-Reaktiv B ein Gemisch B8 ist.

6. Lösungen gemäß einem der Ansprüche 1 bis 5, dadurch gekennzeichnet, daß das aktive Prinzip A + B die folgende Bedeutung S1 besitzt:
A bedeutet wenigstens ein reaktives thermoplastisches Poly(imid-amid)-oligomeres ausgewählt aus der Gruppe gebildet durch die Arten A1, A2 und A3; B = B1, d. h. bedeutet einen Imidbestandteil bestehend aus einer oder mehreren Imidverbindung(en), ausgewählt aus der Gruppe gebildet durch die Arten B1.1 und B1.2; das Verhältnis von B1 stellt 10 Gew.-% bis 40 Gew.-% des aktiven Prinzips dar.

7. Lösungen gemäß Anspruch 5, dadurch gekennzeichnet, daß das aktive Prinzip A + B die folgende Bezeichnung S4 besitzt:
A bedeutet mindestens ein Oligomeres ausgewählt aus A1, A2 und A3; B = B8 und bedeutet ein binäres Gemisch eines Imidbestandteils B1 mit einem phenolischen Bestandteil B4; das Teilverhältnis von B1 bedeutet 10 Gew.-% bis 40 Gew.-% der Gesamtheit A + B1; das Teilverhältnis von B4 bedeutet 2 Gew.-% bis 20 Gew.-% der Gesamtheit A + B4; das Gesamtverhältnis des Gemisches B8 = B1 + B4 bedeutet bis zu 40 Gew.-% des aktiven Prinzips.

8. Lösungen gemäß einem der Ansprüche 1 bis 7, dadurch gekennzeichnet, daß die eingesetzten Lösungsmittel genommen sind aus der Gruppe gebildet durch: N,N-Dimethylacetamid, N,N-Dimethylformamid, N-Methyl-2-pyrrolidon, Dimethylsulfoxid, 1,1,3,3-Tetramethylharnstoff, 1,3-Dimethylharnstoff, und einem Gemisch dieser Lösungsmittel.

9. Verfahren zur Herstellung der Lösungen gemäß einem der Ansprüche 1 bis 8, dadurch gekennzeichnet, daß man die Bestandteile A und B mit dem/den ausgewählten Lösungsmittel(n) direkt vermischt, wobei unter Rühren und bei einer Temperatur von Umgebungstemperatur (23 °C) bis 140 °C gearbeitet wird, wobei die Bestandteile A und B - in dem physikalischen Zustand, in dem sie sich natürlicherweise befinden - getrennt oder in Form eines Vorgemisches eingesetzt werden, das vorher durch einfaches Verkneten der Bestandteile bei einer Temperatur von Umgebungstemperatur (23 °C) bis 50 °C hergestellt wurde.

10. Verfahren zur Herstellung der Lösungen gemäß einem der Ansprüche 1 bis 8, dadurch gekennzeichnet, daß man direkt vermischt, wobei unter Rühren und bei einer Temperatur von Umgebungstemperatur (23 °C) bis 140 °C gearbeitet wird, das Co-Reaktiv B mit mindestens einer rohen Reaktionslösung, wie sie am Ende des Herstellungsverfahrens der reaktiven Poly(imid-amid)-oligomeren A, durchgeführt in dem Milieu aprotischer polarer Lösungsmittel,erhalten ist.

11. Verwendung der Lösungen gemäß einem der Ansprüche 1 bis 8 zur Herstellung von vorimprägnierten Zwischenerzeugnissen, wobei die Technik der Filamentaufwicklung oder diejenige der Imprägnierung von verschiedenen fasrigen Materialien angewandt wird.

## Claims

1. Impregnating solutions consisting of an active principle based on a reactive oligomer and at least one organic solvent for the said oligomer, which are characterized by the following points 1 and 2:
- point 1: the active principle consists of a mixture of A with B, in which:
* A denotes at least one reactive thermoplastic poly(imide-amide) oligomer chosen from the group made up of:
A1: a linear aromatic poly(imide-amide) oligomer of formula 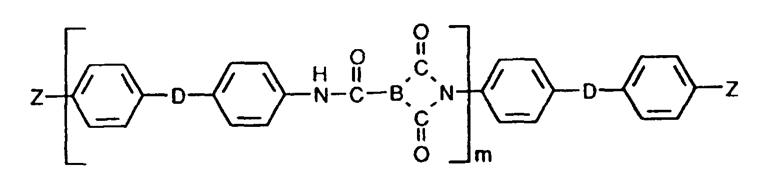 in which
each of the symbols D, which are identical, denotes a single valency bond or a 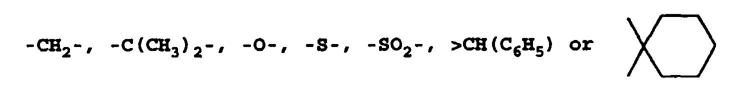 group;
the symbol B denotes a trivalent radical consisting of an aromatic radical containing at least 6 carbon atoms, substituted or otherwise, or consisting of two of these radicals joined together by a single valency bond or a -CH₂-, C(CH₃)₂-, -O- or >C=O group;
the symbol m denotes the average number of the repeat units which is in the range from 1 to 10;
each of the symbols Z, which are identical, denotes a radical of formula 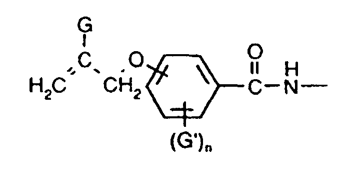 in which
G denotes a hydrogen atom or a methyl radical;
the (meth)allyloxy radical is in an ortho, meta or para position in relation to the carbon atom of the benzene ring joined to the -CONH-group;
G' denotes a methyl radical;
n is an integer equal to 0, 1, 2 or 3;
A2: a linear aromatic poly(imide-amide) oligomer of formula 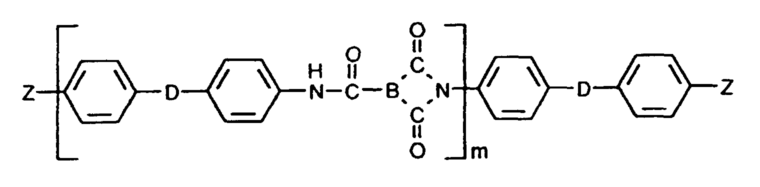 in which
each of the symbols D, which are identical, denotes a single valency bond or a 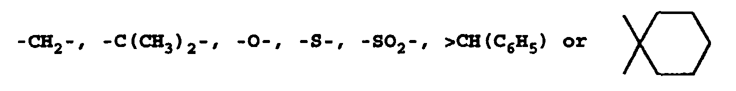 group;
the symbol B denotes a trivalent radical consisting of an aromatic radical containing at least 6 carbon atoms, substituted or otherwise, or consisting of two of these radicals joined together by a single valency bond or a -CH₂-, -C(CH₃)₂-, -O- or >C=O group;
the symbol m denotes the average number of the repeat units which is in the range from 1 to 10;
each of the symbols Z, which are identical, denotes a radical of formula 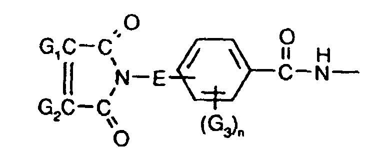 in which
each of G₁ and G₂, which are identical or different, denotes a hydrogen atom or a methyl radical;
G₃ denotes a methyl radical;
n is an integer equal to 0, 1, 2 or 3;
E denotes a single valency bond or a -CH₂- group and is in an ortho, meta or para position in relation to the carbon atom of the benzene ring joined to the -CONH- group;
A3: a linear aromatic poly(imide-amide) oligomer of formula 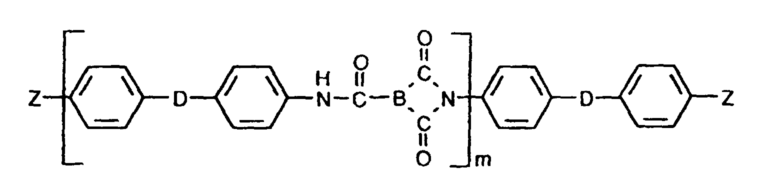 in which
each of the symbols D, which are identical, denotes a single valency bond or a 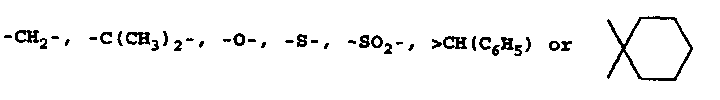 group;
the symbol B denotes a trivalent radical consisting of an aromatic radical containing at least 6 carbon atoms, substituted or otherwise, or of two of these radicals joined together by a single valency bond or a -CH₂-, -C(CH₃)₂-, -O- or >C=O group;
the symbol m denotes the average number of the repeat units which is in the range from 1 to 10;
each of the symbols Z denotes a radical of formula 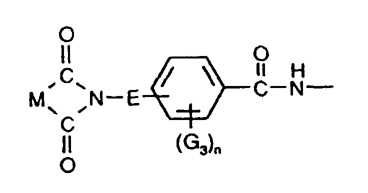 in which
G₃ denotes a methyl radical;
n is an integer equal to 0, 1, 2 or 3;
E denotes a single valency bond or a -CH₂- group and is in an ortho, meta or para position in relation to the carbon atom of the benzene ring joined to the -CONH- group;
M denotes a divalent group 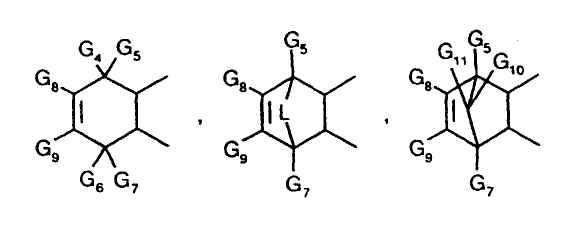 or
each of G₄, G₅, G₆, G₇, G₈, G₉, G₁₀ and G₁₁, which are identical or different, denotes a hydrogen atom or a linear or branched alkyl radical containing from 1 to 4 carbon atoms and
L denotes an oxygen or sulfur atom;
* B denotes a coreactant consisting of one or more compounds containing imide group(s), taken from the group made up of:
- B1.1 the monoimides of formula: 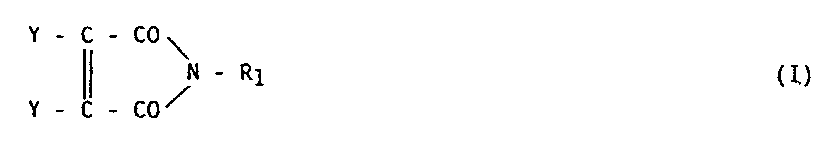 in which:
each of the symbols Y, which are identical or different, denotes H, CH₃ or Cl, and R₁ denotes a hydrogen atom or an aliphatic (saturated or otherwise), cycloaliphatic (saturated or otherwise) or aromatic monovalent hydrocarbon radical containing up to 20 carbon atoms, optionally substituted by a chlorine atom, an alkoxy radical or an alkenyloxy radical;
- B1.2 the N,N'-bisimides of formula: 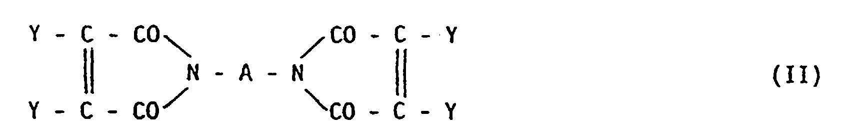 in which:
- the symbol Y has the meaning given above;
- the symbol A denotes a divalent radical chosen from the group consisting of the following radicals: cyclohexylene, phenylene, 4-methyl-1,3-phenylene, 2-methyl-1,3-phenylene, 5-methyl-1,3-phenylene, 2,5-diethyl-3-methyl-1,4-phenylene, and the radicals of formula: 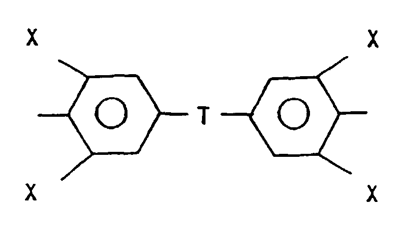 in which T denotes a single valency bond or a group: 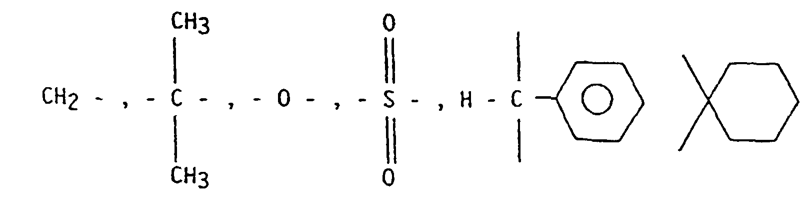 or 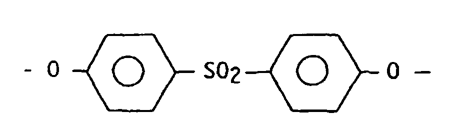 and each of the symbols X, which are identical or different, denotes a hydrogen atom or a methyl, ethyl or isopropyl radical;
B4: a phenol/formaldehyde polycondensate of thermoplastic nature in which the molar ratio of formaldehyde to phenol is between 0.6 and 0.95 and which has a softening point, of "ring and ball" type, measured according to NF standard T 51 437, ranging from 50° to 110°C;
and B8: a mixture of the abovementioned ingredients B1 and B4 with each other;
- point 2: the concentration of the active principle, expressed as weight of the mixture A + B relative to the combination (A + B) + solvent(s), is between 2 % and 80 %, and the proportions of the ingredients B1 and B4, when these ingredients are employed separately or together to produce the active principle A + Bx (where x = 1 or 4), are the following:
- B1: from 2 to 50 %,
- B4: from 1 to 30 %,
these proportions expressing the weight percentage of each ingredient Bx in the combination A + Bx.

2. Solutions according to claim 1, characterized in that the constituent A employed is at least one oligomer chosen from the group made up of the species A2 and A3 which are obtained by direct reaction:
- (in the case of the two species) of an aromatic diisocyanate consisting of 4,4'-diisocyanatodiphenylmethane or 4,4'-diisocyanatodiphenyl ether;
- with (in the case of the two species) a monoanhydride of a tricarboxylic acid consisting of the monoanbydride of trimellitic acid;
- and with a monocarboxylic acid containing a substituent consisting:
* in the case of A2: of 4-maleimidobenzoic acid;
* in the case of A3: of 4-nadimidobenzoic acid or 4-(α-methylnadimido)benzoic acid.

3. Solutions according to either of claims 1 and 2, characterized in that the coreactant B of B1 kind which is employed is N,N'-4,4'-diphenylmethanebismaleimide taken by itself or mixed with N,N'-2-methyl-1,3-phenylenebismaleimide,
N,N'-4-methyl-1,3-phenylenebismaleimide, N,N'-5-methyl-1,3-phenylenebismaleimide and/or N-phenylmaleimide.

4. Solutions according to any one of claims 1 to 3, characterized in that the coreactant B of B4 kind which is employed is a phenol/formaldehyde polycondensate in which the molar ratio of formaldehyde to phenol is between 0.65 and 0.85 and which has a softening point ranging from 60° to 95°C.

5. Solutions according to any one of claims 1 to 4, characterized in that the coreactant B is a mixture B8.

6. Solutions according to any one of claims 1 to 5, characterized in that the active principle A + B has the following meaning S1:
A denotes at least one reactive thermoplastic poly(imide-amide) oligomer chosen from the group made up of the species A1, A2 and A3; B = B1, that is to say denotes an imide ingredient consisting of one or more imide compound(s) chosen from the group made up of the species B1.1 and B1.2; the proportion of B1 represents 10 to 40 % of the weight of the active principle.

7. Solutions according to claim 5, characterized in that the active principle A + B has the following meaning S4:
A denotes at least one oligomer chosen from A1, A2 and A3; B = B8 and denotes a binary mixture of an imide ingredient B1 with a phenolic ingredient B4; the partial proportion of B1 represents 10 to 40 % of the weight of the combination A + B1; the partial proportion B4 represents 2 to 20 % of the weight of the combination A + B4; the overall proportion of the mixture B8 = B1 + B4 represents up to 40 % of the weight of the active principle.

8. Solutions according to any one of claims 1 to 7, characterized in that the solvents used are taken from the group made up of: N,N-dimethylacetamide, N,N-dimethylformamide, N-methyl-2-pyrrolidone, dimethyl sulfoxide, 1,1,3,3-tetramethylurea, 1,3-dimethylurea and a mixture of these solvents.

9. Process for the preparation of solutions according to any one of claims 1 to 8, characterized in that the constituents A and B are mixed directly with the chosen solvents(s), the operation being carried out with stirring and at a temperature ranging from the ambient temperature (23°C) to 140°C, the constituents A and B - in the physical state in which they are found naturally - being introduced separately or in the form of a premix prepared beforehand by simply blending the constituents at a temperature ranging from the ambient temperature (23°C) to 50°C.

10. Process for the preparation of solutions according to any one of claims 1 to 8, characterized in that the coreactant B is mixed directly with at least one crude reaction solution as obtained at the end of the process for the preparation of the reactive poly(imide-amide) oligomers A, conducted in an aprotic polar solvent medium, the mixing operation being carried out with stirring at a temperature ranging from the ambient temperature (23°C) to 140°C.

11. Use of the solutions according to any one of claims 1 to 8 for the manufacture of preimpregnated intermediate articles by applying the filament winding technique or that of the impregnation of various fibrous materials.
